# FASCICULE DE BREVET EUROPEEN

(11) **EP 0 976 519 B1**
(45) Date de publication et mention de la délivrance du brevet: **20.08.2003**
(21) Numéro de dépôt: 99401931.3
(22) Date de dépôt: 28.07.1999
(51) Int. Cl.: B29C 45/14

(54) **Procédé d'ancrage d'une masse thermoplastique et pièce obtenue par mise en oeuvre de ce procédé**
Verfahren zum Verankern einer thermoplastischen Masse und durch Durchführen dieses Verfahrens erhaltener Gegenstand
Method of anchoring a thermoplastic mass and object obtained by carrying out this method

(30) Priorité: 29.07.1998 FR 9809698
(43) Date de publication de la demande: 02.02.2000
(73) Titulaire: COMPAGNIE PLASTIC OMNIUM, 69007 Lyon (FR)
(72) Inventeur: Cheron, Hugues, 01800 Bourg Saint-Christophe (FR)
(74) Mandataire: Leszczynski, André

(56) Documents cités:
- FR-A- 1 433 897
- FR-A- 2 222 888
- FR-A- 2 240 808
- FR-A- 2 297 712
- GB-A- 867 782
- GB-A- 2 002 674
- US-A- 4 106 962
- US-A- 5 672 405

## Description

La présente invention concerne un procédé d'ancrage d'une masse de matière thermoplastique sur un renfort rigide et un tel renfort. Ce procédé d'ancrage trouve son application dans la réalisation de pièces en matière thermoplastique surmoulées sur des renforts rigides tels que des tôles.

De telles pièces en matière plastique renforcées peuvent être utilisées notamment comme pièces de structure de véhicules automobiles.

Du document FR-2 222 888, on connaît un procédé conforme au préambule de la présente revendication 1, qui consiste à solidariser une masse de matière thermoplastique à une tôle grâce à des languettes ou lanières découpées par double cisaillage et déformées hors de la surface de la tôle.

Selon ce procédé antérieur, la matière thermoplastique est extrudée d'un côté et s'écoule à travers les trous ménagés par les lanières déformées en dos d'âne, en dépassant de l'autre côté de la tôle.

On réalise ainsi un ancrage de la masse de matière thermoplastique sur la tôle.

Ce procédé connu présente l'inconvénient que la matière thermoplastique emprisonnée dans l'épaisseur de la tôle subit, lors de son refroidissement, un cisaillement important qui résulte de son retrait.

Ce cisaillement a pour conséquence, d'une part, de fragiliser la liaison ainsi établie entre les quantités de matière thermoplastique présentes de part et d'autre de la tôle, et d'autre part de créer des contraintes internes à la tôle et à la matière thermoplastique, contraintes qui peuvent être préjudiciables au comportement mécanique de la pièce obtenue.

La présente invention vise à résoudre cet inconvénient en proposant un nouveau procédé d'ancrage de la matière thermoplastique sur le renfort dans lequel les cisaillements et les contraintes internes décrits ci-dessus sont notablement amoindris, voire complètement éliminés.

On connaît par le brevet US 5 672 405 une structure composite comportant une matière plastique et une feuille métallique de renfort. Cette dernière est traversée par des trous bordés chacun par des languettes de forme triangulaire, réalisées par poinçonnage. La partie supérieure de ces languettes est dirigée vers l'extérieur.

La présente invention a pour objet un procédé d'ancrage d'une masse de matière thermoplastique sur un renfort rigide présentant au moins une zone de faible épaisseur, par surmoulage dudit renfort, selon lequel on réalise, dans la zone de faible épaisseur dudit renfort, un passage qui permet à la matière thermoplastique de traverser ladite zone de faible épaisseur lors du surmoulage, le passage étant obtenu par découpe d'au moins une lanière dans ladite zone de faible épaisseur et emboutissage de cette lanière pour lui conférer une forme incurvée en saillie d'une des faces de ladite zone de faible épaisseur, caractérisé par le fait que la lanière n'est reliée à la zone de faible épaisseur que par une seule de ses extrémités, son autre extrémité étant libre.

On comprend que, grâce au procédé selon la présente invention, le passage qui permet à la matière thermoplastique de traverser la zone de faible épaisseur du renfort est situé en retrait de la surface de ladite zone de faible épaisseur et que le renfoncement est délimité par deux bords plongeants indépendants qui sont aptes à se déformer en suivant le retrait de la matière thermoplastique et à éliminer les contraintes qui en résultent.

En outre, les bords du renfoncement évitent que la matière thermoplastique emprisonnée dans l'épaisseur de la zone de faible épaisseur ne soit soumise à un cisaillement lors du retrait de l'ensemble de la masse de matière thermoplastique.

Les inventeurs à la base de la présente invention ont constaté que la forme incurvée du renfoncement, combinée au fait que la lanière est libre à l'une de ses extrémités, fournit des résultats tout à fait satisfaisants en ce qui concerne la tenue mécanique de la pièce composite obtenue.

Au sens de la présente invention, on entend par forme incurvée une forme présentant un creux en section suivant un plan perpendiculaire au plan général de la zone de faible épaisseur du renfort.

Dans un mode de mise en oeuvre particulier de l'invention, pour réaliser le passage, on découpe une bande de matière dans la zone de faible épaisseur du renfort, on divise cette bande sensiblement en son milieu pour obtenir deux lanières en vis-à-vis, puis on emboutit les deux lanières pour leur conférer chacune une forme incurvée.

Dans un autre mode de mise en oeuvre de l'invention, pour réaliser le passage, on découpe et on emboutit plusieurs lanières disposées radialement autour d'un point fixe immatériel, de manière que leurs extrémités libres soient réunies autour de ce point fixe immatériel.

Dans une variante avantageuse de ce mode de mise en oeuvre, les lanières sont découpées suivant des lignes qui s'interceptent toutes au point immatériel, lequel est sensiblement le centre du passage.

Le passage est alors sensiblement de révolution.

Le procédé d'ancrage selon l'invention est particulièrement avantageux à mettre en oeuvre pour des passages de petites dimensions.

En outre, selon l'invention, il est avantageux de réaliser plusieurs passages rapprochés les uns des autres dans une même zone de faible épaisseur, notamment s'il s'agit de passages de petites dimensions.

La présente invention a également pour objet l'application du procédé décrit ci-dessus à la réalisation de pièces de structure de véhicules automobiles ainsi que les pièces de structure telles qu'obtenues par la mise en oeuvre du procédé, notamment des éléments d'absorption d'énergie de pare-chocs, des supports d'organes d'équipement, et des supports de pièces de carrosserie.

Dans le but de mieux faire comprendre l'invention, on va en décrire maintenant deux modes de mise en oeuvre donnés à titre d'exemples non limitatifs en référence au dessin annexé dans lequel :
- la figure 1 est une vue en perspective d'une portion d'un renfort,
- la figure 2 est une vue en coupe selon II-II de la figure 1,
- la figure 3 est une vue en coupe selon III-III de la figure 2,
- la figure 4 est une vue en perspective d'une autre portion d'un renfort,
- la figure 5 est une vue en coupe selon V-V de la figure 4,
- la figure 6 est une vue de dessus de la figure 5.

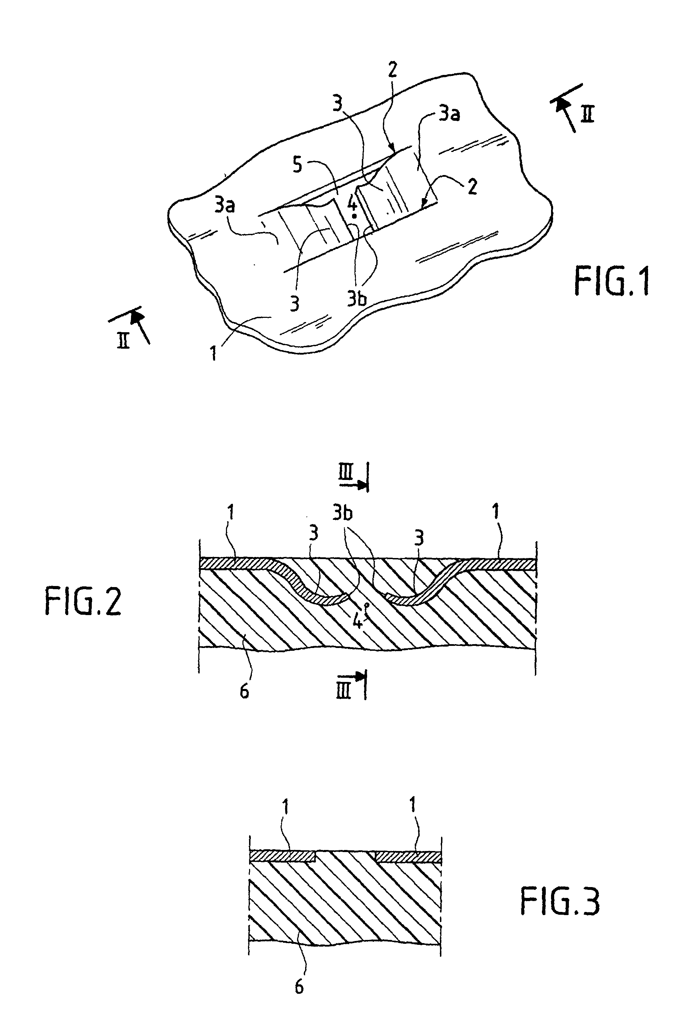

Dans le premier mode de mise en oeuvre, le renfort 1, dont on ne voit que la zone de faible épaisseur, est découpé le long de deux lignes parallèles 2, de manière à former une bande de matière 3. Cette bande de matière 3 est divisée en son milieu en deux lanières qui comportent chacune une extrémité 3a solidaire du renfort et une extrémité 3b libre. Chaque lanière 3 est ensuite incurvée par emboutissage, pour prendre la forme incurvée qui est mieux visible sur la figure 2.

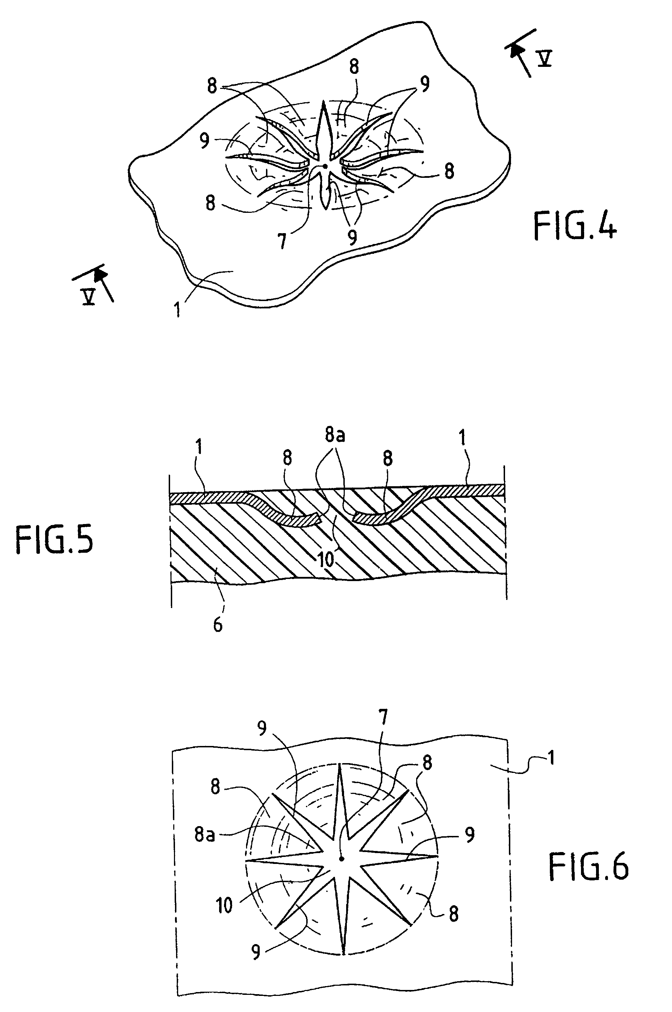

Comme on le voit sur la figure 3, les lanières 3 laissent un passage 4 entre leurs extrémités libres 3b ainsi qu'un passage 5 le long des lignes de découpe 2 desdites lanières.

On obtient ainsi un renfoncement de la zone de faible épaisseur qui est approprié pour supporter des retraits linéaires de la matière thermoplastique suivant la direction des lignes de découpe 2.

Lors du surmoulage, la matière plastique 6 traverse les passages 4 et 5 et remplit le renfoncement formé par les lanières 3 incurvées en venant affleurer la surface de la zone de faible épaisseur du renfort.

Dans le deuxième mode de mise en oeuvre illustré par les figures 4 à 6, on a réalisé un perçage de petit diamètre en un point 7 de la zone de faible épaisseur du renfort, puis on a découpé, autour de ce perçage, des lanières radiales 8 délimitées par des lignes de découpe 9 initialement sécantes au point 7.

Une fois les lanières 8 découpées, on les emboutit à l'aide d'un outil de révolution (non représenté) centré sur le point 7.

Lors de l'emboutissage, le perçage s'est agrandi et est devenu le passage 10 entouré des extrémités libres 8b des lanières.

Le renfoncement obtenu présente une section axiale identique à celle de la figure 2, mais dans le cas de ce deuxième mode de mise en oeuvre, le passage est sensiblement de révolution.

La matière plastique peut traverser le renfort par le passage 10 ainsi que par les lignes de découpe 9 entre les lanières 8.

Ce mode d'accrochage de la matière plastique sur le renfort est adapté à une pièce dont le retrait ne se produit pas suivant une direction privilégiée mais s'effectue de manière homogène dans toutes les directions.

Dans les deux exemples décrits ci-dessus, les inventeurs ont pu constater un accrochage d'excellente qualité de la matière thermoplastique sur le renfort et une bonne conservation des propriétés mécaniques de la pièce composite obtenue, du fait de la disparition des cisaillements et contraintes internes constatés dans l'état de la technique.

Il est bien entendu que les modes de mise en oeuvre qui viennent d'être décrits ne présentent aucun caractère limitatif et qu'ils pourront recevoir toutes modifications désirables sans sortir pour cela du cadre de l'invention tel que defini dans les revendications.

## Revendications

1. Procédé d'ancrage d'une masse de matière thermoplastique sur un renfort rigide (1) présentant au moins une zone de faible épaisseur, par surmoulage dudit renfort, selon lequel on réalise, dans la zone de faible épaisseur dudit renfort (1), un passage qui permet à la matière thermoplastique de traverser ladite zone de faible épaisseur lors du surmoulage, le passage étant obtenu par découpe d'au moins une lanière (3, 8) dans ladite zone de faible épaisseur et emboutissage de cette lanière pour lui conférer une forme incurvée en saillie d'une des faces de ladite zone de faible épaisseur, **caractérisé par le fait que** la lanière (3, 8) n'est reliée à la zone de faible épaisseur que par une seule (3a) de ses extrémités, son autre extrémité (3b, 8b) étant libre.

2. Procédé selon la revendication 1, **caractérisé par le fait que**, pour réaliser le passage, on découpe une bande de matière dans la zone de faible épaisseur du renfort, on divise cette bande sensiblement en son milieu pour obtenir deux lanières (3) en vis-à-vis, puis on emboutit les deux lanières pour leur conférer chacune une forme incurvée.

3. Procédé selon la revendication 1, **caractérisé par le fait que**, pour réaliser le passage, on découpe et on emboutit plusieurs lanières (8) disposées radialement autour d'un point fixe immatériel (7), de manière que leurs extrémités libres (8b) soient réunies autour de ce point fixe immatériel.

4. Procédé selon la revendication 3, **caractérisé par le fait que** les lanières (8) sont découpées suivant des lignes (9) qui s'interceptent toutes au point immatériel (7), lequel est sensiblement le centre du passage.

5. Procédé selon l'une quelconque des revendications 2 à 4, **caractérisé par le fait que** l'extrémité libre de chaque lanière (3, 8) est dirigée vers le centre du renfoncement obtenu par l'emboutissage.

6. Procédé selon l'une quelconque des revendications précédentes, **caractérisé par le fait que** l'on réalise plusieurs passages rapprochés les uns des autres dans une même zone de faible épaisseur du renfort.

7. Application du procédé selon l'une quelconque des revendications précédentes, à la réalisation de pièces de structure de véhicules automobiles.

8. Pièces de structure de véhicules automobiles telles qu'obtenues par mise en oeuvre du procédé selon l'une quelconque des revendications 1 à 6 notamment éléments d'absorption d'énergie de pare-chocs, supports d'organes d'équipement, supports de pièces de carrosserie.

## Patentansprüche

1. Verfahren zum Verankern einer Masse aus thermoplastischem Material an einer wenigstens einen Bereich geringer Dicke aufweisenden steifen Verstärkung (1) durch Überformen der Verstärkung, wonach in dem Bereich geringer Dicke der Verstärkung (1) ein Durchgang ausgebildet wird, der es dem thermoplastischen Material ermöglicht, den Bereich geringer Dicke beim Überformen zu durchdringen, wobei der Durchgang durch Zuschneiden wenigstens eines Riemens (3, 8) in dem Bereich geringer Dicke und Tiefziehen dieses Riemens, um ihm eine von einer der Seiten des Bereichs geringer Dicke vorspringende, gebogene Form zu verleihen, erhalten wird, **dadurch gekennzeichnet, dass** der Riemen (3, 8) lediglich durch ein einziges (3a) seiner Enden mit dem Bereich geringer Dicke verbunden ist, wobei sein anderes Ende (3b, 8b) frei ist.

2. Verfahren nach Anspruch 1, **dadurch gekennzeichnet, dass** zum Ausbilden des Durchgangs ein Materialstreifen in dem Bereich geringer Dicke der Verstärkung zugeschnitten wird, dieser Streifen im Wesentlichen in seiner Mitte geteilt wird, um zwei einander gegenüberliegende Riemen (3) zu erhalten, anschließend die beiden Riemen tiefgezogen werden, um ihnen jeweils eine gebogene Form zu verleihen.

3. Verfahren nach Anspruch 1, **dadurch gekennzeichnet, dass** zum Ausbilden des Durchgangs mehrere um einen festen, immateriellen Punkt (7) radial angeordnete Riemen (8) zugeschnitten und tiefgezogen werden, derart, dass ihre freien Enden (8b) um diesen festen, immateriellen Punkt vereinigt sind.

4. Verfahren nach Anspruch 3, **dadurch gekennzeichnet, dass** die Riemen (8) entlang von Linien (9) zugeschnitten sind, die alle im immateriellen Punkt (7), der im Wesentlichen der Mittelpunkt des Durchgangs ist, unterbrochen sind.

5. Verfahren nach irgendeinem der Ansprüche 2 bis 4, **dadurch gekennzeichnet, dass** das freie Ende eines jeden Riemens (3, 8) zum Mittelpunkt der durch das Tiefziehen erhaltenen Vertiefung gerichtet ist.

6. Verfahren nach irgendeinem der vorhergehenden Ansprüche, **dadurch gekennzeichnet, dass** mehrere nahe beieinander liegende Durchgänge in ein und demselben Bereich geringer Dicke der Verstärkung ausgebildet werden.

7. Anwendung des Verfahrens nach irgendeinem der vorhergehenden Ansprüche bei der Ausbildung von Strukturteilen von Kraftfahrzeugen.

8. Strukturteile von Kraftfahrzeugen, wie sie durch Durchführung des Verfahrens nach irgendeinem der Ansprüche 1 bis 6 erhalten werden, insbesondere Energieaufnahmeelemente von Stoßfängern, Träger von Ausstattungselementen, Träger von Karosserieteilen.

## Claims

1. Method of anchoring a thermoplastic mass on a rigid reinforcement (1) having at least one region of small thickness, by overmoulding of the said reinforcement, in which process a passage is made in the region of small thickness of the said reinforcement (1), allowing the thermoplastic to pass through the said region of small thickness during the overmoulding, the passage being obtained by cutting at least one strip (3, 8) in the said region of small thickness and by deforming this strip so as to give it a curved shape projecting from one of the faces of the said region of small thickness, **characterized in that** the strip (3, 8) is linked to the region of small thickness only by just one (3a) of its ends, its other end (3b, 8b) being free.

2. Method according to Claim 1, **characterized in that**, to produce the passage, a band of material is cut in the region of small thickness of the reinforcement, this band is divided approximately at the middle of it so as to obtain two strips (3) facing each other, and then the two strips are deformed so as to give each of them a curved shape.

3. Method according to Claim 1, **characterized in that**, to produce the passage, several strips (8) arranged radially around an arbitrary fixed point (7) are cut and deformed so that their free ends (8b) are joined around this arbitrary fixed point.

4. Method according to Claim 3, **characterized in that** the strips (8) are cut along lines (9) all of which intercept one another at the arbitrary point (7), which is approximately the centre of the passage.

5. Method according to any one of Claims 2 to 4, **characterized in that** the free end of each strip (3, 8) is directed towards the centre of the reinforcement obtained by the deformation.

6. Method according to any one of the preceding claims, **characterized in that** several passages close together are produced in the same region of small thickness of the reinforcement.

7. Application of the method according to any one of the preceding claims to the production of structural parts of motor vehicles.

8. Structural parts of motor vehicles, such as those obtained by implementing the method according to any one of Claims 1 to 6, especially energy-absorbing bumper elements, supports for items of equipment and supports for bodywork parts.
